# EUROPÄISCHE PATENTANMELDUNG

(11) **EP 0 618 669 A1**
(43) Veröffentlichungstag der Anmeldung: **05.10.1994**
(21) Anmeldenummer: 94104202.0
(22) Anmeldetag: 15.03.1994
(51) Int. Cl.: H02P 1/26

(54) **Asychronmaschine mit einem Kurzschlussläufer**

(30) Priorität: 30.03.1993 DE 4310320
(71) Anmelder: SIEMENS AKTIENGESELLSCHAFT, D-80333 München (DE)
(72) Erfinder: Branden, Jürgen, Dr., D-97616 Bad Neustadt (DE)

(57) **Zusammenfassung**

Die Erfindung bezieht sich auf eine Asynchronmaschine mit einem Kurzschlußläufer, der mittels Wälzlager drehbar gelagert ist. Eine Schädigung der fettgeschmierten Lager der Maschine beim Anfahren der Maschine in einem Temperaturbereich unter oder um den Gefrierpunkt wird dadurch vermieden, daß vor dem Anlauf der Maschine in Abhängigkeit von der an der Maschine herrschenden Temperatur an deren Ständerwicklung (1) bei gleichzeitiger Blockierung des Läufers (2) eine Spannung solcher Größe angelegt ist, daß ein Mehrfaches des Maschinennennstromes fließt und daß bei Erreichen einer bestimmten Temperatur an vorbestimmten Maschinenteilen oder nach einer bestimmten Wirkungszeit der Spannung diese abgeschaltet und die Blockierung des Läufers (2) aufgehoben ist.

## Beschreibung

Die Erfindung betrifft eine Asynchronmaschine mit einem Kurzschlußläufer, der mittels Wälzlager drehbar gelagert ist.

Die Wälzlager derartiger Maschinen sind in der Regel mit Fett geschmiert. Bei Asynchronmotoren werden im Läufer und somit auch an den Lagern hohe Temperaturen erreicht und es müssen daher Schmierfette verwendet werden, die auch bei hohen Lagertemperaturen noch eine ausreichende Schmierung der Lager gewährleisten. Solche Schmierfette haben jedoch den Nachteil, daß sie bei niederen Temperaturen fest werden. Bei Temperaturen unter oder um den Gefrierpunkt können derartige Schmierfette so fest werden, daß sie ihre Schmierwirkung vollkommen verlieren. Wird ein Motor beim Vorliegen solcher Umstände in Betrieb genommen, erfolgt eine Schädigung der Walzlager, die, wenn nicht sofort so doch bei wiederholtem Anlauf des Motors unter den geschilderten Umständen zu einem Totalausfall führen kann. Insbesondere Motoren, die im Freiluftbereich, z.B. bei Elektrofahrzeugen, eingesetzt werden, sind großen Temperaturschwankungen unterworfen.

Der Erfindung liegt die Aufgabe zugrunde, eine Asynchronmaschine der gattungsgemäßen Art so auszubilden, daß auch bei einem Anfahren der Maschine in einem Temperaturbereich unter oder um den Gefrierpunkt eine Schädigung der fettgeschmierten Lager der Maschine vermieden wird.

Die Lösung der gestellten Aufgabe gelingt nach der Erfindung durch die im Kennzeichen des Anspruchs 1 angegebenen Merkmale. Durch das Anlegen einer entsprechenden Spannung an die Ständerwicklung, wird in dem Kurzschlußläufer ein Rotorstrom induziert, der zu einer entsprechenden Erwärmung des Läufers und damit auch der Lager führt. Da der Läufer blockiert ist, erfolgt an den Lagern keine Drehbewegung, die eine Schädigung derselben hervorrufen könnte. Erst wenn an den Lagern eine die Schmierfähigkeit des Fettes nicht mehr beeinträchtigende Temperatur erreicht ist, wird die Spannung abgeschaltet und die Blockierung aufgehoben. Durch Anlegen der Betriebsspannung kann die Maschine dann in Betrieb genommen werden.

Besonders vorteilhaft ist es, eine einphasige Wechselspannung an die Maschine anzulegen, da dann normalerweise kein oder nur ein geringes Drehmoment am Läufer entsteht.

Die Überwachung der Maschine auf ein zulässiges Anfahren kann dadurch erfolgen, daß die mittels mindestens eines Temperaturfühlers an den vorbestimmten Maschinenteilen ermittelten Temperaturwerte einer Auswerteelektronik zugeführt sind, durch die entsprechende Steuersignale an eine Blockiervorrichtung des Läufers abgegeben sind. Mittels der Temperaturfühler kann die Temperatur der entsprechenden Maschinenlager auf direkte oder indirekte Weise ermittelt werden. So ist es möglich, z.B. durch am Wickelkopf der Maschine angeordnete Temperaturfühler auf die Lagertemperatur zu schließen. Damit können evtl. ohnehin für die Überwachung der Maschine vorhandene Temperaturfühler für die Anfahrüberwachung verwendet werden.

Unzulässige Stromhöhen wahrend des Anwärmvorganges werden dadurch vermieden, daß der Auswerteelektronik ferner die Größe der in der Ständervicklung fließenden Ströme zugeführt und durch die Auswerteelektronik ein die Stromgröße beeinflussendes Steuerglied gesteuert ist. Da Asynchronmaschinen häufig in geregeltem Betrieb gefahren werden, sind bereits Strommeßvorrichtungen vorhanden, so daß die Stromsteuerung während des Anwärmvorganges praktisch keinen zusätzlichen Aufwand erfordert.

Bei in Straßenfahrzeugen, z.B. Autos, U- oder S-Bahnen eingebauten Asynchronmaschinen kann der Läufer mittels der vorhandenen Fahrzeugbremse blockiert werden. Damit entfallen zusätzliche Blockierelemente.

Da Straßenfahrzeuge in der Regel mit einer Fahrzeugbatterie ausgerüstet sind, erfolgt die Speisung der Maschine zweckmäßigerweise aus dieser Fahrzeugbatterie, wobei als Steuerglied ein Umrichter zwischen der Fahrzeugbatterie und der Ständerwicklung vorgesehen ist, der durch die Auswerteelektronik steuerbar ist.

Durch direkt an den Lagern der Maschine angeordnete Temperaturfühler läßt sich die an den Maschinenlagern herrschende Temperatur unmittelbar erfassen.

Anhand eines schematischen Schaltbildes einer Asynchronmaschine wird die Erfindung nachfolgend näher beschrieben.

Mit 1 ist die dreiphasige Ständerwicklung und mit 2 der Läufer eines Asynchronmotors bezeichnet. Über ein Getriebe 3 ist der Läufer 2 mit einem Antriebsrad 4 eines Elektrofahrzeuges gekuppelt. Auf der Welle 5 des Antriebsrades 4 ist eine Fahrzeugbremse 6 angeordnet.

Ein Temperaturmeßfühler 7 ist bei dem dargestellten Ausführungsbeispiel einer Phase der Ständerwicklung 1 zugeordnet. Die räumliche Anordnung dieses Temperaturmeßfühlers 7 erfolgt zweckmäßigerweise am Wickelkopf der Maschine. In diesem Falle kann der Temperaturmeßfühler auch zur Erfassung der Betriebstemperatur der Ständerwicklung verwendet werden. Die Ständerwicklung 1 wird über einen Umrichter 8 aus einer Fahrzeugbatterie 9 gespeist. Die Steuerung des Umrichters 8 erfolgt durch eine Auswerteeinheit 10.

Dieser Auswerteeinheit 10 werden über eine erste Steuerleitung 11 die von dem Temperaturmeßfühler 7 ermittelten Temperaturwerte zugeführt. Ferner erhält die Auswerteeinheit 10 über eine zweite und dritte Steuerleitung 12 und 13 die von in den Zuleitungen von mindestens zwei Phasensträngen der Ständerwicklung 1 angeordneten Stromwandlern 14 und 15 ermittelten Stromwerte zugeführt. Über eine vierte Steuerleitung 16 ist die Auswerteeinrichtung 10 mit der Fahrzeugbremse 6 verbunden.

Vor dem Anfahren des Asynchronmotors werden die von dem Temperaturfühler 7 an die Auswerteeinrichtung 10 übermittelten Temperaturwerte überprüft. Im kalten Zustand des Asynchronmotors entsprechen diese Werte auch der an den Lagern des Motors herrschenden Temperatur. Durch die Auswerteeinrichtung 10 wird eine Auswertung der übermittelten Temperaturwerte vorgenommen. Ist die festgestellte Temperatur so niedrig, daß keine ausreichende Schmierfähigkeit des Schmierfettes vorliegt, wird von der Auswerteeinrichtung 10 über die vierte Steuerleitung 16 ein Blockierbefehl an die Fahrzeugbremse 6 gegeben. Die Fahrzeugbremse 6 wird in Funktion gesetzt und blockiert den Antrieb, d.h. den Läufer 2 des Asynchronmotors.

Außerdem steuert die Auswerteeinrichtung 10 den Umrichter 8 so an, daß eine Speisung der Ständerwicklung 1 mit einer Wechselspannung erfolgt. Durch die an der Ständerwicklung 1 somit anliegende Wechselspannung wird in dem Kurzschlußkäfig des Läufers 2 eine Spannung induziert, die einen Stromfluß im Läufer 2 hervorruft. Die Größe der Wechselspannung ist so gewählt, daß der Strom im Läufer 2 ein Mehrfaches des Nennstromes beträgt. Hierdurch wird eine schnelle Erwärmung des Läufers 2 und damit der Lager erreicht. Vorteilhaft ist es, auch die Frequenz der angelegten Wechselspannung größer als die Frequenz der Betriebsspannung zu wählen. So haben sich Frequenzen von mehr als 100 Hz für die Wechselspannung als besonders günstig erwiesen.

Beim Anlegen einer einphasigen Wechselspannung entsteht normalerweise kein Drehmoment am Läufer 2 des Asynchronmotors. Höchstens beim Vorliegen von Unsymmetrien können kleinere Drehmomente auftreten. Gegenüber diesen Drehmomenten kann der Läufer 2 leicht durch die Fahrzeugbremse 6 blockiert werden.

Die Dauer für das Anliegen der Wechselspannung kann vom Erreichen einer bestimmten, durch den eingebauten Temperaturmeßfühler 7 gemessenen Temperatur abhängig gemacht werden oder es kann eine feste, auf die Gegebenheiten des Asynchronmotors abgestimmte Zeit vorgegeben werden. Dies ist besonders dann notwendig, wenn durch den Temperaturmeßfühler 7 auch die Wicklungstemperatur der Maschine während des Betriebes erfaßt werden soll. Entweder nach dem Feststellen der entsprechenden Temperatur an den Lagern oder an einer Stelle des Motors, an der die Temperatur der Lagertemperatur proportional ist oder auch nach Ablauf der vorgegebenen Zeit, wird der Umrichter 8 durch die Auswerteeinrichtung 10 abgeschaltet oder auch direkt auf dreiphasigen Betrieb umgeschaltet. Gleichzeitig wird die Blockierung der Fahrzeugbremse 6 durch ein entsprechendes Steuersignal aufgehoben. Damit kann der Läufer 2 des Asynchronmotors sich zu drehen beginnen und das Fahrzeug in Bewegung setzen.

Durch das Vorwärmen erhält das in den Lagern des Asynchronmotors befindliche Schmierfett seine Schmierfähigkeit zurück, so daß auch bei niedrigen Umgebungstemperaturen die Lager bereits beim ersten Anfahren des Asynchronmotors ausreichend geschmiert und somit vor einer Beschädigung geschützt werden.

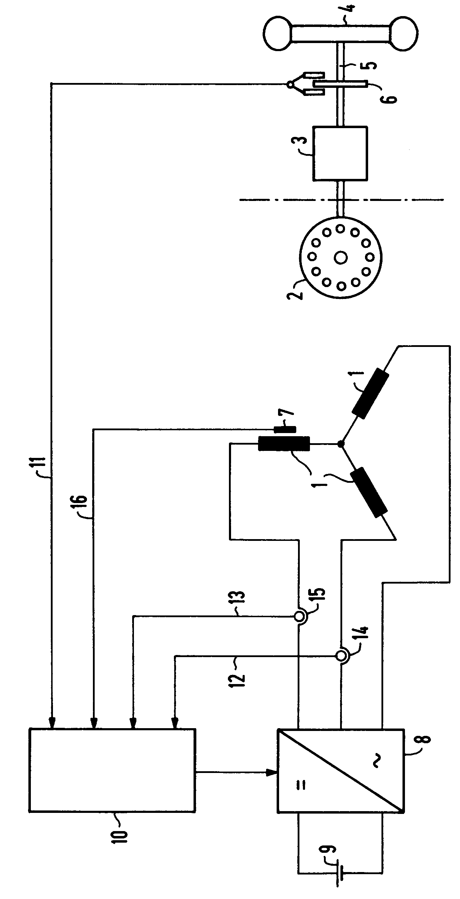

## Patentansprüche

1. Asynchronmaschine mit einem Kurzschlußläufer, der mittels Wälzlager drehbar gelagert ist,
**dadurch gekennzeichnet**,
daß vor dem Anlauf der Maschine in Abhängigkeit von der an der Maschine herrschenden Temperatur an deren Ständerwicklung (1) bei gleichzeitiger Blockierung des Läufers (2) eine Spannung solcher Größe angelegt ist, daß ein Mehrfaches des Maschinennennstromes fließt und daß bei Erreichen einer bestimmten Temperatur an vorbestimmten Maschinenteilen oder nach einer bestimmten Wirkungszeit der Spannung diese abgeschaltet und die Blockierung des Läufers (2) aufgehoben ist.

2. Asynchronmaschine nach Anspruch 1,
**dadurch gekennzeichnet**,
daß eine einphasige Wechselspannung angelegt ist.

3. Asynchronmaschine nach Anspruch 1 oder 2,
**dadurch gekennzeichnet**,
daß die mittels mindestens eines Temperaturfühlers (7) an den vorbestimmten Maschinenteilen ermittelten Temperaturwerte einer Auswerteelektronik (10) zugeführt sind, durch die entsprechende Steuersignale an eine Blockiervorrichtung (6) des Läufers (2) abgegeben sind.

4. Asynchronmaschine nach Anspruch 3,
**dadurch gekennzeichnet**,
daß der Auswerteelektronik (10) ferner die Größe der in der Ständerwicklung (1) fließenden Ströme zugeführt und durch die Auswerteelektronik (10) ein die Stromgröße beeinflussendes Steuerglied (8) gesteuert ist.

5. In ein Straßenfahrzeug eingebaute Asynchronmaschine nach einem oder mehreren der Ansprüche 1 bis 4,
**dadurch gekennzeichnet**,
daß als Blockiereinrichtung für den Läufer (2) die Bremse (6) des Fahrzeuges verwendet ist.

6. Asynchronmaschine nach Anspruch 5,
**dadurch gekennzeichnet**,
daß die Speisung aus einer Fahrzeugbatterie (9) erfolgt, wobei als Steuerglied ein Umrichter (8) zwischen der Batterie (9) und der Ständerwicklung (1) vorgesehen ist, der durch die Auswerteelektronik (10) steuerbar ist.

7. Asynchronmaschine nach Anspruch 5 oder 6,
**dadurch gekennzeichnet**,
daß Temperaturfühler direkt an den Lagern der Maschine angeordnet sind.
